# EUROPÄISCHE PATENTSCHRIFT

(11) **EP 3 750 390 B1**
(45) Veröffentlichungstag und Bekanntmachung des Hinweises auf die Patenterteilung: **23.02.2022**
(21) Anmeldenummer: 20175418.1
(22) Anmeldetag: 19.05.2020
(51) Int. Cl.: A01C 23/00, B65G 33/14, B65G 33/26

(54) **FÖRDERVORRICHTUNG FÜR EINEN GÜLLEVERTEILER**
CONVEYOR FOR A LIQUID MANURE DISTRIBUTOR
DISPOSITIF DE TRANSPORT POUR UN DISTRIBUTEUR DE LISIER

(30) Priorität: 21.05.2019 DE 102019113551
(43) Veröffentlichungstag der Anmeldung: 16.12.2020
(73) Patentinhaber: Fliegl Agrartechnik GmbH, 84453 Mühldorf am Inn (DE)
(72) Erfinder: Fliegl sen., Josef, 84556 Kastl (DE)
(74) Vertreter: Nußbaum, Christopher

(56) Entgegenhaltungen:
- EP-A1- 0 772 965
- WO-A1-95/05067
- DE-A1- 19 738 961
- DE-A1-102004 053 085
- DE-C- 725 310

## Beschreibung

Die vorliegende Erfindung betrifft eine Fördervorrichtung für einen Gülleverteiler und einen Gülleverteiler mit einer solchen Fördervorrichtung.

Gülleverteiler zum Verteilen von Gülle, zum Beispiel auf Feldern, sind an sich bekannt. Beispielsweise zeigt die DE 20 2014 105 317 U1 einen Gülleverteiler. Der Gülleverteiler ist an einem Fasswagen angebracht, welcher ein Güllefass aufweist. Mittels des Gülleverteilers kann in dem Fass vorgehaltene Gülle beispielsweise auf einem Feld verteilt werden. Weitere Gülleverteiler mit den Merkmalen des Oberbegriffs des Anspruch 1 sind aus EP 0 772 965 A1 und DE 10 2004 053085 A1 bekannt.

Es ist die Aufgabe der vorliegenden Erfindung, eine Lösung bereitzustellen, mittels welcher auf besonders einfache und zuverlässige Weise eine Mengenregulierung von Gülle bei einem Gülleverteiler erzielt werden kann.

Diese Aufgabe wird durch eine Fördervorrichtung für einen Gülleverteiler mit den Merkmalen des Patentanspruchs 1 gelöst. Weitere mögliche Ausgestaltungen der Erfindung sind in den abhängigen Ansprüchen angegeben.

Die erfindungsgemäße Fördervorrichtung für einen Gülleverteiler umfasst einen Behälter zum Aufnehmen von Gülle, welcher mehrere, insbesondere in axialer Richtung hintereinander angeordnete, Austrittsöffnungen aufweist, durch welche die Gülle aus dem Behälter austreten kann. Des Weiteren umfasst die Fördervorrichtung einen innerhalb des Behälters angeordneten Schneckenförderer mit einem Schneckengewinde zum Fördern der im Behälter angeordneten Gülle zu den Austrittsöffnungen. Zudem umfasst der Schneckenförderer eine Abdeckspirale, die sich bereichsweise bei Rotation des Schneckenförderers in Umfangsrichtung und in axialer Richtung an den Austrittsöffnungen vorbeibewegt und diese dadurch abdeckt sowie wieder freigibt.

Bei der Abdeckspirale kann es sich beispielsweise um ein helixförmiges Blech handeln. Andere Ausgestaltungen und Materialien der Abdeckspirale sind ebenfalls möglich. Die Abdeckspirale ist mit dem restlichen Schneckenförderer fest verbunden. Somit dreht sich die Abdeckspirale bei Rotation des restlichen Schneckenförderers mit diesem mit. Während der Förderung der im Behälter angeordneten Gülle mittels des Schneckengewindes zu den Austrittsöffnungen werden die Austrittsöffnungen durch die Abdeckspirale immer wieder abgedeckt und immer wieder freigegeben. Die Abdeckspirale ist dabei so angeordnet und so geformt, dass diese die Austrittsöffnungen abdecken und dadurch zumindest im Wesentlichen verschließen kann. Die Abdeckspirale dient also dazu, den Durchfluss der Gülle durch die Austrittsöffnungen zu regulieren.

Durch das Vorsehen der Abdeckspirale können die Austrittsöffnungen wesentlich größer gewählt werden, als dies ohne die Abdeckspirale möglich wäre. Denn während der Rotation des Schneckenförderers werden die Austrittsöffnungen immer wieder durch die Abdeckspirale abwechselnd abgedeckt und wieder freigegeben. Durch die Austrittsöffnungen fließt dadurch während des Betriebs des Schneckenförderers weniger Gülle als wenn die Abdeckspirale nicht vorhanden wäre. Somit ist es möglich, die Austrittsöffnungen entsprechend größer zu wählen, sodass die Gefahr bzw. das Risiko minimiert werden kann, dass die Austrittsöffnungen insbesondere durch in der Gülle enthaltene Feststoffe verstopft werden. Beispielsweise durch Regulierung der Rotationsgeschwindigkeit des Schneckenförderers kann festgelegt werden, wie oft und wie stark die einzelnen Austrittsöffnungen abgedeckt und wiederum freigegeben werden. Auch durch entsprechende Einstellung einer Steigung der Abdeckspirale in Kombination mit einer entsprechenden Einstellung der jeweiligen Abstände zwischen den Austrittsöffnungen kann eingestellt werden, wann, wie lange und wie stark die Austrittsöffnungen während des Betriebs, also der Rotation, des Schneckenförderers durch die Abdeckspirale abgedeckt und wieder freigegeben werden.

Mittels der erfindungsgemäßen Fördervorrichtung ist es also möglich, die besagten Austrittsöffnungen im Behälter der Fördervorrichtung relativ groß zu wählen, ohne Gefahr zu laufen, dass in unerwünschter Weise zu viel Gülle aus den Austrittsöffnungen austritt. Denn die sich mit dem restlichen Schneckenförderer gemeinsam drehende Abdeckspirale sorgt dafür, dass die Austrittsöffnungen des Behälters periodisch wiederkehrend abgedeckt und wieder freigegeben werden.

Eine mögliche Ausführungsform der Erfindung sieht vor, dass die Abdeckspirale während einer vollen Umdrehung des Schneckenförderers zumindest einen Teil der Austrittsöffnungen vollständig abdeckt und wieder vollständig freigibt. Beispielsweise kann die Abdeckspirale abgestimmt auf die Größe und die Beabstandung der Austrittsöffnungen so ausgestaltet sein, dass immer ein Teil der Austrittsöffnungen momentan abgedeckt bzw. verdeckt und ein Teil der Austrittsöffnungen wiederum freigegeben ist. Die Abdeckspirale kann beispielsweise so ausgestaltet sein, dass nie alle Austrittsöffnungen vollständig freigegeben sind. Insbesondere kann die Abdeckspirale so ausgestaltet sein, dass zumindest im Wesentlichen immer ein konstanter Gesamtvolumenstrom an Gülle aus den Austrittsöffnungen austreten kann, welcher kleiner ist, als wenn alle Austrittsöffnungen freigeben wären. Somit können die Austrittsöffnungen relativ groß gewählt werden, ohne dass zu viel Gülle aus den Austrittsöffnungen austritt. Der Volumenstrom der aus den Austrittsöffnungen austretenden Gülle ergibt sich unter anderem aus der Ausgestaltung der Abdeckspirale.

Eine weitere mögliche Ausführungsform der Erfindung sieht vor, dass die Abdeckspirale breiter als die Austrittsöffnungen ist. Die Abdeckspirale kann beispielsweise im Wesentlichen bandförmig und spiralförmig ausgebildet sein. Das aus der Abdeckspirale gebildete spiralförmige Band kann als breiter als die Austrittsöffnungen sein. Dadurch kann sichergestellt werden, dass mittels der Abdeckspirale die jeweiligen Austrittsöffnungen vollständig abgedeckt und dadurch zumindest im Wesentlichen flüssigkeitsdicht verschlossen werden können. Die Abdeckspirale kann beispielsweise auch doppelt so breit oder noch breiter als die Austrittsöffnungen sein. Dadurch kann die Abdeckspirale auch mit relativ großen Montagetoleranzen eingesetzt bzw. montiert werden, wobei dennoch sichergestellt werden kann, dass die Austrittsöffnungen mittels der Abdeckspirale wiederkehrend vollständig abgedeckt und somit verschlossen werden können.

Gemäß einer weiteren möglichen Ausführungsform der Erfindung ist es vorgesehen, dass der Behälter im Bereich der Austrittsöffnungen die gleiche Krümmung wie die Abdeckspirale aufweist. Unter der Krümmung ist dabei insbesondere die Krümmung einer Außenseite der Abdeckspirale zu verstehen, welche einer Behälterinnenseite des Behälters zugewandt ist. Die Außenseite der Abdeckspirale weist also zumindest im Wesentlichen die gleiche Krümmung wie der Bereich der Behälterinnenseite auf, in dem die Austrittsöffnungen angeordnet sind. Der Behälter kann beispielsweise im Bereich der Austrittsöffnungen gekrümmt sein, wobei diese Krümmung zumindest im Wesentlichen der Krümmung der Abdeckspirale entsprechen kann. Durch diese geometrische Angleichung der Bereiche der Austrittsöffnungen des Behälters und der Abdeckspirale kann auf besonders zuverlässige Weise sichergestellt werden, dass die Austrittsöffnungen mittels der Abdeckspirale abgedeckt bzw. verschlossen werden können.

In weiterer möglicher Ausgestaltung der Erfindung ist es vorgesehen, dass die Abdeckspirale sich in konstantem Abstand um eine Welle des Schneckenförderers windet. So ist es mittels der Abdeckspirale auf besonders zuverlässige Weise möglich, die Austrittsöffnungen abzudecken und zu verschließen. Zudem kann die Abdeckspirale dadurch besonders einfach hergestellt werden, beispielsweise indem diese aus einem Blechrohr herausgeschnitten wird. So ist es beispielsweise möglich, auf Basis eines Blechrohrs zwei der Abdeckspiralen herzustellen, welche anschließend in Längsrichtung hintereinander angeordnet und als Teil des Schneckenförderers beispielsweise am Schneckengewinde befestigt werden können.

Eine weitere mögliche Ausgestaltung der Erfindung sieht vor, dass die Abdeckspirale eine konstante Breite aufweist. Dadurch lässt sich die Abdeckspirale besonders einfach herstellen, beispielsweise in der oben genannten Weise. Zudem lässt sich bei konstanter Breite der Abdeckspirale die Abdeckung und Freigabe der Austrittsöffnungen besonders einfach und gleichmäßig steuern.

In weiterer möglicher Ausgestaltung der Erfindung ist es vorgesehen, dass die Abdeckspirale und das Schneckengewinde die gleiche Steigung aufweisen. So ist es beispielsweise auf einfache Weise möglich, die Abdeckspirale direkt am Schneckengewinde zu befestigen. Zudem werden dadurch die Förderleistung des Schneckengewindes und das Abdeck- und Freigabeverhalten der Austrittsöffnungen durch die Abdeckspirale besonders gut aufeinander abgestimmt.

Eine weitere mögliche Ausführungsform der Erfindung sieht vor, dass die Abdeckspirale bezogen auf eine Förderrichtung des Schneckenförderers spiralförmig hinter einer spiralförmigen Vorderseite des Schneckengewindes - also an einer von der Vorderseite abgewandten Rückseite des Schneckengewindes - angeordnet ist, mittels welcher die Gülle bei Rotation des Schneckenförderers in axialer Richtung förderbar ist. Die Vorderseite des Schneckengewindes dient also dazu, die im Behälter angeordnete Gülle in axialer Richtung zu fördern. Insbesondere wenn die Abdeckspirale und das Schneckengewinde die gleiche Steigung aufweisen, ist es auf besonders einfache Weise möglich, die Abdeckspirale in der erläuterten Weise am Schneckengewinde zu befestigen. Die spiralförmige Vorderseite des Schneckengewindes, wie das Schneckengewinde als Ganzes, windet sich dabei beispielsweise um die Welle des Schneckenförderers. Die Abdeckspirale windet sich beispielsweise ebenfalls um die Welle des Schneckenförderers und kann an einer von der Vorderseite des Schneckengewindes abgewandten Rückseite des Schneckengewindes angeschweißt sein. Gemäß einer weiteren möglichen Ausführungsform der Erfindung ist es vorgesehen, dass ein radialer Abstand zwischen einer Behälterinnenseite und einer Schnittkante des Schneckengewindes kleiner als ein radialer Abstand zwischen der Abdeckspirale und der Behälterinnenseite ist. Die Schnittkante befindet sich an der zuvor bereits erwähnten Vorderseite des Schneckengewindes. Bezogen auf die radiale Richtung befindet sich die Schnittkante des Schneckengewindes an der äußersten Stelle des Schneckengewindes und kann in der Gülle enthaltene Feststoffe zerschneiden bzw. zertrennen, insbesondere wenn die Feststoffe zwischen die Behälterinnenseite und die Schnittkante gelangen. Dadurch, dass der radiale Abstand zwischen der Behälterinnenseite und der Schnittkante kleiner ist als der radiale Abstand zwischen der Abdeckspirale und der Behälterinnenseite kann einerseits eine zuverlässige Schnittwirkung der Schnittkante sichergestellt werden, andererseits kann dadurch auch sichergestellt werden, dass eventuell zwischen der Abdeckspirale und der Behälterinnenseite vorhandene Feststoffe der Gülle nicht dazu führen, dass der Schneckenförderer durch diese Feststoffe verklemmt wird. Denn durch die besagten Abstandsverhältnisse kann zumindest sichergestellt werden, dass mittels der Schnittkante zerkleinerte Feststoffe nicht mehr so groß sind, dass diese in einem Zwischenbereich zwischen der Abdeckspirale und der Behälterinnenseite dazu führen können, dass das Schneckengewinde dadurch verklemmt bzw. blockiert wird.

Der erfindungsgemäße Gülleverteiler umfasst die erfindungsgemäße Fördervorrichtung oder eine mögliche Ausführungsform der erfindungsgemäßen Fördervorrichtung.

Weitere mögliche Vorteile, Merkmale und Einzelheiten der Erfindung werden anhand der nachfolgenden Figuren beschrieben. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung wie in den beigefügten Ansprüche definiert zu verlassen.

Die Zeichnung zeigt in:
- Fig. 1: eine Perspektivansicht eines Fasswagens mit einem Güllefass, an welchem ein Gülleverteiler angebracht ist, wobei an jeweiligen ausklappbaren und verschwenkbaren Tragarmen jeweilige Fördervorrichtungen zum Fördern von Gülle angebracht sind;
- Fig. 2: eine Perspektivansicht einer am Gülleverteiler anbringbaren herkömmlichen Fördervorrichtung, umfassend einen Behälter mit mehreren Austrittsöffnungen und einen Schneckenförderer zum Fördern der Gülle zu den Austrittsöffnungen;
- Fig. 3: eine Perspektivansicht einer am Gülleverteiler anbringbaren Fördervorrichtung, welche sich von der in Fig. 2 gezeigten Fördervorrichtung dadurch unterscheidet, dass der Schneckenförderer eine Abdeckspirale zum Abdecken und Freigeben der Austrittöffnungen aufweist;
- Fig. 4: eine Perspektivansicht der Förderschnecke mit der Abdeckspirale;
- Fig. 5: eine Seitenansicht der Förderschnecke mit der Abdeckspirale;
- Fig. 6: eine Seitenansicht entlang der in Fig. 5 gekennzeichneten Schnittebene A-A;
- Fig. 7: vier Detailansichten der Fördervorrichtung entlang einer ähnlichen Schnittebene wie in Fig. 6, wobei anhand der vier Detailansichten eine jeweilige Abdeckung bzw. Freigabe von einem der Austrittöffnungen durch die Abdeckspirale bei verschiedenen Stellungen des Schneckenförderers dargestellt ist;
- Fig. 8: eine weitere Detailansicht der Fördervorrichtung, in welcher ein radialer Abstand zwischen der Abdeckspirale und einer Behälterinnenseite des Behälters der Fördervorrichtung dargestellt ist.

In den Figuren sind gleiche oder funktionsgleiche Elemente mit den gleichen Bezugszeichen versehen worden.

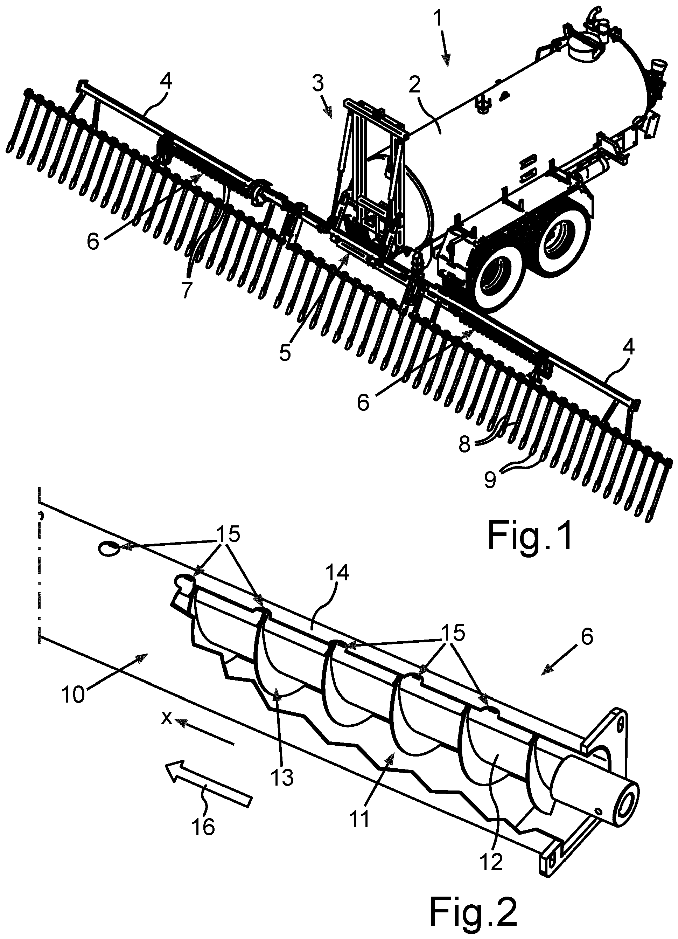

Ein Fasswagen 1 ist in einer Perspektivansicht in Fig. 1 gezeigt. Der Fasswagen 1 umfasst ein Güllefass 2 zum Aufnehmen von Gülle. An dem Güllefass 2 bzw. an dem Fasswagen 1 ist ein Gülleverteiler 3 angeordnet.

Der Gülleverteiler 3 umfasst zwei seitliche Tragarme 4, welche verschwenkbar zu einem mittleren Tragarm 5 sind. Dadurch können die seitlichen Tragarme 4 in die hier gezeigte Arbeitsstellung ausgeklappt und bei Bedarf seitlich angeklappt werden. An den seitlichen Tragarmen 4 sind jeweilige Fördervorrichtungen 6 angeordnet. Die Fördervorrichtungen 6 weisen jeweiligen Gülletüllen 7 auf, aus welchen Gülle austreten kann. Die Fördervorrichtungen 6 können über hier nicht dargestellte Schläuche oder über andere Verbindungselemente mit dem Güllefass 2 des Fasswagens 1 verbunden werden. So kann die in dem Fass 2 aufgenommene Gülle zu den Fördervorrichtungen 6 gelangen.

An den jeweiligen Gülletüllen 7 der Fördervorrichtungen 6 können hier nicht dargestellte Schläuche angeschlossen werden, welche wiederum an jeweiligen Blattfedern 8 des Gülleverteilers 3 befestigt werden können. Die Enden dieser hier nicht dargestellten Schläuche können in Schlitzschuhen 9 münden. Mittels dieser Schlitzschuhe 9 kann der Boden aufgeschlitzt werden, sodass die Gülle in die hergestellten Schlitze eingebracht werden kann.

Eine Perspektivansicht einer am Gülleverteiler 3 anbringbaren herkömmlichen Fördervorrichtung 6 ist in einer Perspektivansicht in Fig. 2 teilweise dargestellt. Ein Behälter 10 der Fördervorrichtung 6 zum Aufnehmen von Gülle ist teilweise geschnitten bzw. offen dargestellt, sodass der Blick ins Innere des Behälters 10 freigegeben wird. Innerhalb des Behälters 10 ist ein Schneckenförderer 11 angeordnet, der eine Welle 12 aufweist, um die sich ein Schneckengewinde 13 zum Fördern der im Behälter 10 angeordneten Gülle windet. An einer Unterseite 14 des Behälters 10 sind mehrere Austrittsöffnungen 15 in axialer Richtung x hintereinander angeordnet. Durch diese Austrittsöffnungen 15 kann die im Behälter 10 aufgenommene Gülle austreten. Die zuvor im Zusammenhang mit Fig. 1 beschriebenen Gülletüllen 7 sind hier nicht gezeigt. Diese können an den jeweiligen Austrittsöffnungen 15 angebracht sein.

Bei der hier gezeigten herkömmlichen Fördervorrichtung 6 wird ein Volumenstrom der aus den Austrittsöffnungen 15 austretenden Gülle u.a. durch den Schneckenförderer 11, also durch dessen Rotationsgeschwindigkeit, beeinflusst. Ebenfalls kann der Volumenstrom durch die Austrittsöffnungen 15 bezüglich der Gülle noch beispielsweise durch einen Druck im Güllefass 2 (siehe Fig. 1) beeinflusst werden. Fließt beispielsweise in ungewollter Weise sehr viel Gülle aus den Austrittsöffnungen 15, so kann die auf ein Feld ausgebrachte Gülle z.B. dadurch beeinflusst werden, wie schnell der Fasswagen 1 mittels eines Traktors über das Feld bewegt wird. Zudem dürfen die Austrittsöffnungen 15 nicht zu groß ausfallen, da sonst selbst bei schneller Fahrt mit dem Fasswagen 1 zu viel Gülle aufs Feld austreten würde.

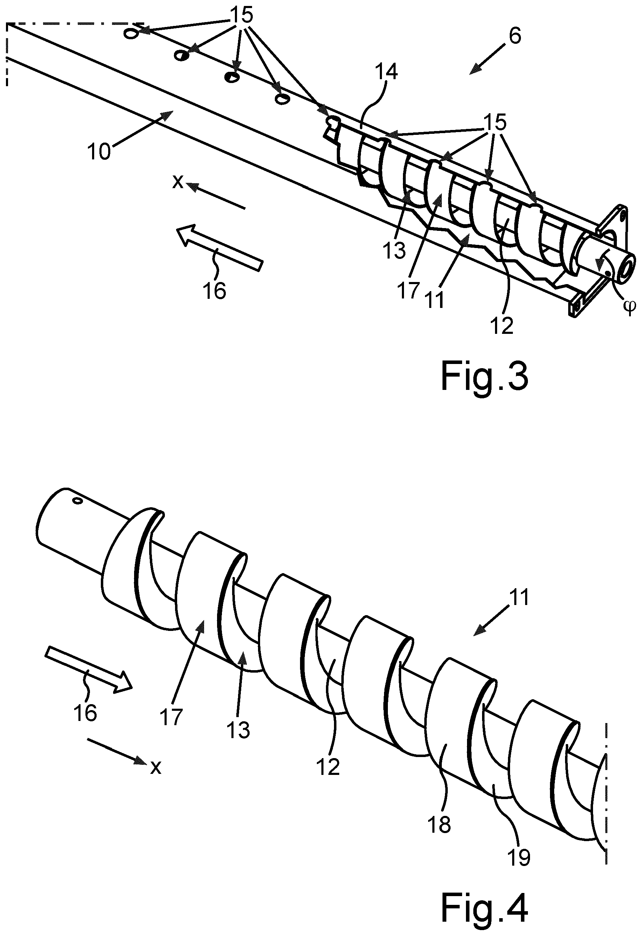

In Fig. 3 ist eine andere Fördervorrichtung 6 in einer Perspektivansicht gezeigt, die wiederum am Gülleverteiler 3 als dessen Bestandteil angebracht werden kann. Diese Fördervorrichtung 6 unterscheidet sich von der in Fig. 2 gezeigten herkömmlichen Fördervorrichtung 6 dadurch, dass der Schneckenförderer 11 eine Abdeckspirale 17 zum Abdecken und Freigeben der Austrittsöffnungen 15 aufweist. Die Abdeckspirale 17 ist fest mit dem restlichen Schneckenförderer 11 verbunden. Bei Rotation des Schneckenförderers 11 bewegt sich in Folge dessen die Abdeckspirale 17 in Umfangsrichtung ϕ und in axialer Richtung x an den Austrittsöffnungen 15 vorbei, sodass diese dadurch abwechselnd immer wieder abgedeckt und freigeben werden.

Während der Rotation des Schneckenförderers 11 sorgt also das Schneckengewinde 13 dafür, dass die im Behälter 10 angeordnete Gülle in der Förderrichtung 16, also in axialer Richtung x, zu den Austrittsöffnungen 15 gefördert wird. Gleichzeitig kommt es zu einem periodisch wiederkehrenden Abdecken und Freigeben der einzelnen Austrittsöffnungen 15, da jeweilige im Bereich der Austrittsöffnungen 15 angeordnete Abschnitte der Abdeckspirale 17 einerseits in Umfangsrichtung ϕ an den Austrittsöffnungen 15 vorbeibewegt werden und gleichzeitig, aufgrund der Spiralform, in axialer Richtung x an den Austrittsöffnungen 15 vorbeibewegt werden. Durch entsprechende Ausgestaltung der Abdeckspirale 17 und einen entsprechenden Lochabstand zwischen den Austrittsöffnungen 15 werden letztere bei Rotation des Schneckenförderers 11 zeitweise also immer durch entsprechende Bereiche bzw. Abschnitte der Abdeckspirale 17 abgedeckt und wieder freigegeben. Die Austrittsöffnungen 15 können im Vergleich zu dem in Fig. 2 gezeigten herkömmlichen Schneckenförderer 11 größer gewählt werden, ohne dass dadurch insgesamt mehr Gülle aus den Austrittsöffnungen 15 austritt. Der Vorteil der größer gestalteten Austrittsöffnungen 15 liegt unter anderem darin, dass in der Gülle vorhandene Feststoffe die Austrittsöffnungen 15 nicht so schnell zusetzen bzw. verstopfen können.

In Fig. 4 ist der Schneckenförderer 11, welcher die Abdeckspirale 17 aufweist, allein in einer Perspektivansicht gezeigt. Die Abdeckspirale 17 windet sich in konstantem radialem Abstand um die Welle 12 des Schneckenförderers 11. Abgesehen von jeweiligen Längsenden weist die Abdeckspirale 17 auch eine konstante Breite auf. Dadurch kann die Abdeckspirale 17 ganz einfach hergestellt werden, beispielswese indem diese aus einem Blechrohr herausgeschnitten wird. Vorliegend kann man auch gut erkennen, dass die Abdeckspirale 17 und das Schneckengewinde 13 die gleiche Steigung aufweisen. Die Abdeckspirale 17 und das Schneckengewinde 13 sind ineinander verschachtelt angeordnet. Bezogen auf die Förderrichtung 16 des Schneckenförderers 11 ist die Abdeckspirale 17 spiralförmig hinter einer spiralförmigen Vorderseite 19 des Schneckengewindes 13 angeordnet. Eine Außenseite 18 der Abdeckspirale 17, welche zum alternierenden Abdecken und Freigeben der jeweiligen Austrittsöffnungen 15 dient, erstreckt sich bezogen auf die Förderrichtung 16 also immer hinter der Vorderseite 19 des Schneckengewindes 13.

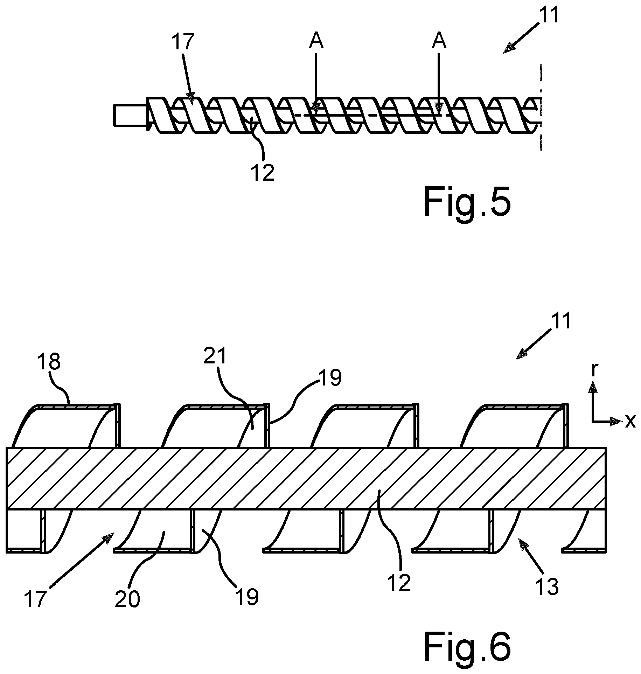

In Fig. 5 ist der die Abdeckspirale 17 aufweisende Schneckenförderer 11 in einer Seitenansicht gezeigt. Vorliegend ist die Ausgestaltung der Abdeckspirale 17 nochmals gut zu erkennen, welche bandartig ausgebildet ist und sich spiralförmig um die Welle 12 windet.

In Fig. 6 ist der Schneckenförderer 11 entlang der in Fig. 5 gekennzeichneten Schnittebene A-A gezeigt. Vorliegend wird der Blick auf eine Innenseite 20 der Abdeckspirale 17 freigegeben, wobei aufgrund der hier gewählten Längsschnittansicht die Welle 12 des Schneckenförderers 11 geschnitten dargestellt ist. Die Vorderseite 19 des Schneckengewindes 13 ist hier nochmals gut zu erkennen. Gegenüberliegend von der Vorderseite 19 befindet sich eine Rückseite 21 des Schneckengewindes 13.

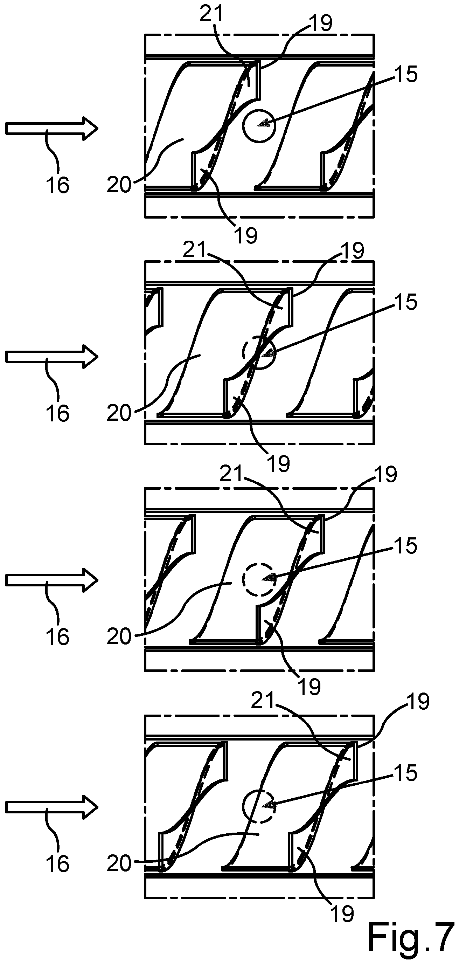

In Fig. 7 sind vier Detailansichten der Fördervorrichtung 6 entlang einer ähnlichen Schnittebene wie in Fig. 6 gezeigt, wobei anhand der vier Detailansichten eine Abdeckung und Freigabe von einer der Austrittsöffnungen 15 durch jeweilige Bereiche der Abdeckspirale 17 bei Rotation des Schneckenförderers 11 dargestellt ist. In der obersten Abbildung soll davon ausgegangen werden, dass der Schneckenförderer 11 sich noch in einer Ausgangsstellung befindet und sich noch gar nicht gedreht hat. Damit man die Austrittsöffnung 15 erkennen kann, ist die Welle 12 des Schneckenförderers 11 nicht dargestellt. Die hier gezeigte Austrittsöffnung 15 wird in der obersten Abbildung nicht von der Abdeckspirale 17 verdeckt, da sich diese Austrittsöffnung 15 gerade zwischen zwei Windungen der Abdeckspirale 17 befindet.

In der zweiten Abbildung von oben wurde der Schneckenförderer 11 um 90° weitergedreht. Nun wird die Austrittsöffnung 15 teilweise durch einen Bereich der Abdeckspirale 17 abgedeckt, sodass durch diese Austrittsöffnung 15 nicht mehr ganz so viel Gülle hindurchfließen kann. Die hier nicht erkennbare Außenseite 18 der Abdeckspirale 17 verdeckt also einen Teil der hier zu erkennenden Austrittsöffnung 15.

In der dritten Abbildung von oben wurde nun der Schneckenförderer 11, ausgehend von der Stellung in der obersten Abbildung, um 180° rotiert. In Folge dessen wird die hier erkennbare Austrittsöffnung 15 nun vollständig von der Abdeckspirale 17, genauer von einem Bereich der nicht erkennbaren Außenseite 18 der Abdeckspirale 17, verdeckt. Dadurch fließt keine oder so gut wie keine Gülle mehr durch die Austrittsöffnung 15. In der vierten Abbildung von oben wurde der Schneckenförderer 11 nun ausgehend von der ganz oben gezeigten Ausgangsstellung um 270° rotiert. In Folge dessen wird die hier erkennbare Austrittsöffnung 15 wiederum teilweise von der Abdeckspirale 17, genauer von einem Bereich ihrer Außenseite 18, freigegeben, sodass wieder ein wenig Gülle aus der Austrittsöffnung 15 austreten kann.

Die Abstände zwischen den Austrittsöffnungen 15 können dabei angepasst an die Ausgestaltung der Abdeckspirale 17 so gewählt werden, dass immer ein Teil der Austrittsöffnungen 15 verdeckt, teilweise verdeckt und freigegeben wird. Beispielsweise kann durch entsprechende Einstellung der Breite der Abdeckspirale 17 im Zusammenspiel mit der Steigung der Abdeckspirale 17 festgelegt werden, wie die Austrittsöffnungen 15 beim Rotieren des Schneckenförderers 11 abgedeckt und freigegeben werden.

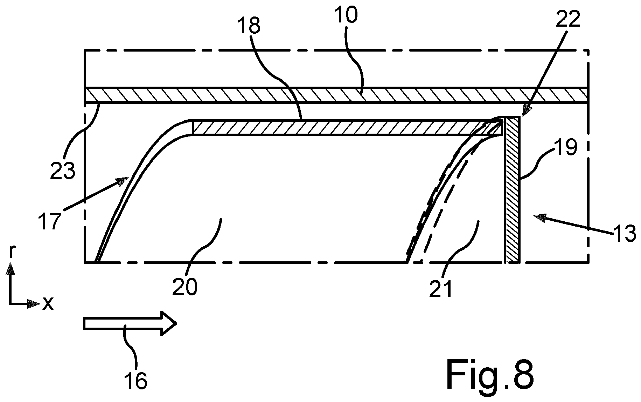

In Fig. 8 ist eine weitere Detailansicht der Fördervorrichtung 6 gezeigt, in welcher ein radialer Abstand zwischen der Abdeckspirale 17 und einer Behälterinnenseite 23 des Behälters 10 dargestellt ist. Hier kann man erkennen, dass ein radialer Abstand zwischen der Behälterinnenseite 23 und einer Schnittkante 22 des Schneckengewindes 13 kleiner ist als ein radialer Abstand zwischen der Abdeckspirale 17 und der Behälterinnenseite 23.

Die sich parallel zur Längsrichtung bzw. axialen Richtung x erstreckende Außenseite 18 der Abdeckspirale 17 ist also von der Behälterinnenseite 23 in radialer Richtung weiter beabstandet als die Schnittkante 22, welche an der Vorderseite 19 des Schneckengewindes 13 ausgebildet ist. Die ebenfalls spiralförmig verlaufende Schnittkante 22 bildet also in axialer Richtung x das vorderste und in radialer Richtung r das äußerste Ende der Vorderseite 19 des Schneckengewindes 13. Die Schnittkante 22 sorgt dafür, in der Gülle vorhandene Festbestandteile zu zerkleinern, wenn diese zwischen die Schnittkante 22 und die Behälterinnenseite 23 gelangen. In den Zwischenraum zwischen der Außenseite 18 der Abdeckspirale 17 und der Behälterinnenseite 23 gelangende Feststoffe sind also in jedem Fall kleiner als der radiale Abstand zwischen der Außenseite 18 der Abdeckspirale 17 und der Behälterinnenseite 23. In Folge dessen kann das Risiko erheblich minimiert oder gänzlich ausgeschlossen werden, dass in der Gülle vorhandene Feststoffe sich zwischen der Außenseite 18 der Abdeckspirale 17 und der Behälterinnenseite 23 so verklemmen, dass der Schneckenförderer 11 blockiert.

### BEZUGSZEICHENLISTE

- 1: Fasswagen
- 2: Güllefass
- 3: Gülleverteiler
- 4: seitlicher Tragarm
- 5: mittlerer Tragarm
- 6: Fördervorrichtung
- 7: Gülletülle
- 8: Blattfeder
- 9: Schlitzschuh
- 10: Behälter
- 11: Schneckenförderer
- 12: Welle des Schneckenförderers
- 13: Schneckengewinde des Schneckenförderers
- 14: Unterseite des Behälters
- 15: Austrittsöffnungen an der Unterseite des Behälters
- 16: Förderrichtung des Schneckenförderers
- 17: Abdeckspirale zum Abdecken der Austrittsöffnungen
- 18: Außenseite der Abdeckspirale
- 19: Vorderseite des Schneckengewindes
- 20: Innenseite der Abdeckspirale
- 21: Rückseite des Schneckengewindes
- 22: Schnittkante des Schneckengewindes
- 23: Behälterinnenseite
- r: radiale Richtung
- x: axiale Richtung
- ϕ: Umfangsrichtung

## Patentansprüche

1. Fördervorrichtung (6) für einen Gülleverteiler (3), umfassend
- einen Behälter (10) zum Aufnehmen von Gülle, welcher mehrere, insbesondere in axialer Richtung (x) hintereinander angeordnete, Austrittsöffnungen (15) aufweist, durch welche die Gülle aus dem Behälter (10) austreten kann;
- einen innerhalb des Behälters (10) angeordneten Schneckenförderer (11) mit einem Schneckengewinde (13) zum Fördern der im Behälter (10) angeordneten Gülle zu den Austrittsöffnungen (15);
- **dadurch gekennzeichnet, dass** der Schneckenförderer (11) eine Abdeckspirale (17) aufweist, die sich bereichsweise bei Rotation des Schneckenförderers (11) in Umfangsrichtung (ϕ) und in axialer Richtung (x) an den Austrittsöffnungen (15) vorbeibewegt und diese dadurch abdeckt sowie wieder freigibt.

2. Fördervorrichtung (6) nach Anspruch 1,
**dadurch gekennzeichnet, dass**
die Abdeckspirale (17) während einer vollen Umdrehung des Schneckenförderers (11) zumindest einen Teil der Austrittöffnungen (15) vollständig abdeckt und wieder vollständig freigibt.

3. Fördervorrichtung (6) nach Anspruch 1 oder 2,
**dadurch gekennzeichnet, dass**
die Abdeckspirale (17) breiter als die Austrittsöffnungen (15) ist.

4. Fördervorrichtung (6) nach einem der vorhergehenden Ansprüche,
**dadurch gekennzeichnet, dass**
der Behälter (10) im Bereich der Austrittsöffnungen (15) die gleiche Krümmung wie die Abdeckspirale (17) aufweist.

5. Fördervorrichtung (6) nach einem der vorhergehenden Ansprüche,
**dadurch gekennzeichnet, dass**
die Abdeckspirale (17) sich in konstantem Abstand um eine Welle (12) des Schneckenförderers (11) windet.

6. Fördervorrichtung (6) nach einem der vorhergehenden Ansprüche,
**dadurch gekennzeichnet, dass**
die Abdeckspirale (17) eine konstante Breite aufweist.

7. Fördervorrichtung (6) nach einem der vorhergehenden Ansprüche,
**dadurch gekennzeichnet, dass**
die Abdeckspirale (17) und das Schneckengewinde (13) die gleiche Steigung aufweisen.

8. Fördervorrichtung (6) nach einem der vorhergehenden Ansprüche,
**dadurch gekennzeichnet, dass**
die Abdeckspirale (17) bezogen auf eine Förderrichtung (16) des Schneckenförderers (11) spiralförmig hinter einer spiralförmigen Vorderseite (19) des Schneckengewindes (13) angeordnet ist, mittels welcher die Gülle bei Rotation des Schneckenförderers (11) in axialer Richtung (x) förderbar ist.

9. Fördervorrichtung (6) nach einem der vorhergehenden Ansprüche,
**dadurch gekennzeichnet, dass**
ein radialer Abstand zwischen einer Behälterinnenseite (23) und einer Schnittkante (22) des Schneckengewindes (13) kleiner als ein radialer Abstand zwischen der Abdeckspirale (17) und der Behälterinnenseite (23) ist.

10. Gülleverteiler (3) mit einer Fördervorrichtung (6) nach einem der vorhergehenden Ansprüche.

## Claims

1. Conveyor (6) for a liquid manure distributor (3), comprising
- a container (10) for receiving liquid manure, which has a plurality of outlet openings (15), in particular arranged one behind the other in the axial direction (x), through which the liquid manure can pass out from the container (10);
- a worm conveyor (11) arranged within the container (10) and with a worm thread (13) for conveying the liquid manure arranged in the container (10) to the outlet openings (15);
- **characterised in that** the worm conveyor (11) has a cover helix (17) which during rotation of the worm conveyor (11) moves in certain areas past the outlet openings (15) in the circumferential direction (ϕ) and in the axial direction (x) and thereby covers the latter and uncovers them again.

2. Conveyor (6) according to claim 1,
**characterised in that**
during a full rotation of the worm conveyor (11), the cover helix (17) completely covers at least some of the outlet openings (15) and completely uncovers them again.

3. Conveyor (6) according to claim 1 or 2,
**characterised in that**
the cover helix (17) is wider than the outlet openings (15).

4. Conveyor (6) according to any one of the preceding claims,
**characterised in that**
in the region of the outlet openings (15) the container (10) has the same curvature as the cover helix (17).

5. Conveyor (6) according to any one of the preceding claims,
**characterised in that**
the cover helix (17) winds at a constant distance around a shaft (12) of the worm conveyor (11).

6. Conveyor (6) according to any one of the preceding claims,
**characterised in that**
the cover helix (17) has a constant width.

7. Conveyor (6) according to any one of the preceding claims,
**characterised in that**
the cover helix (17) and the worm thread (13) have the same pitch.

8. Conveyor (6) according to any one of the preceding claims,
**characterised in that**
the cover helix (17) is arranged, with respect to a conveying direction (16) of the worm conveyor (11), in the form of a spiral behind a spiral-shaped front side (19) of the worm thread (13), by which means the liquid manure can be conveyed in the axial direction (x) during rotation of the worm conveyor (11).

9. Conveyor (6) according to any one of the preceding claims,
**characterised in that**
a radial distance between a container innerside (23) and a cutting edge (22) of the worm thread (13) is smaller than a radial distance between the cover helix (17) and the container inner side (23).

10. Liquid manure distributor (3) comprising a conveyor (6) according to any one of the preceding claims.

## Revendications

1. Dispositif de convoyage (6) destiné à un dispositif d'épandage de fumier (3), comprenant
- une cuve (10) pour recevoir le fumier, laquelle présente plusieurs, en particulier dans la direction axiale (x), ouvertures de sortie (15) disposées les unes derrière les autres, par lesquelles le fumier peut sortir de la cuve (10) ;
- un convoyeur à vis (11) disposé à l'intérieur de la cuve (10) doté d'une vis sans fin (13) pour convoyer le fumier disposé dans la cuve (10) vers les ouvertures de sortie (15) ;
- **caractérisé en ce que**
le convoyeur à vis (11) présente une spirale de recouvrement (17), qui passe partiellement lors de la rotation du convoyeur à vis (11) dans la direction circonférentielle (ϕ) et dans la direction axiale (x) devant les ouvertures de sortie (15) et qui les recouvre par conséquent, et les découvre à nouveau.

2. Dispositif de convoyage (6) selon la revendication 1,
**caractérisé en ce que**
la spirale de recouvrement (17) recouvre au moins entièrement une partie des ouvertures de sortie (15) lors d'un tour complet du convoyeur à vis (11), puis la découvre entièrement.

3. Dispositif de convoyage (6) selon la revendication 1 ou 2,
**caractérisé en ce que**
la spirale de recouvrement (17) est plus large que les ouvertures de sortie (15).

4. Dispositif de convoyage (6) selon l'une quelconque des revendications précédentes,
**caractérisé en ce que**
la cuve (10) présente dans la zone des ouvertures de sortie (15) la même courbure que celle de la spirale de recouvrement (17).

5. Dispositif de convoyage (6) selon l'une quelconque des revendications précédentes,
**caractérisé en ce que**
la spirale de recouvrement (17) s'enroule autour d'un arbre (12) du convoyeur à vis (11) selon une distance constante.

6. Dispositif de convoyage (6) selon l'une quelconque des revendications précédentes,
**caractérisé en ce que**
la spirale de recouvrement (17) présente une largeur constante.

7. Dispositif de convoyage (6) selon l'une quelconque des revendications précédentes,
**caractérisé en ce que**
la spirale de recouvrement (17) et la vis sans fin (13) présentent la même inclinaison.

8. Dispositif de convoyage (6) selon l'une quelconque des revendications précédentes,
**caractérisé en ce que**
la spirale de recouvrement (17) est disposée en spirale derrière une face avant (19) en spirale de la vis sans fin (13) par rapport à une direction de convoyage (16) du convoyeur à vis (11), au moyen de laquelle le fumier peut être convoyé par rotation du convoyeur à vis (11) dans la direction axiale (x).

9. Dispositif de convoyage (6) selon l'une quelconque des revendications précédentes,
**caractérisé en ce qu'**
une distance radiale entre un côté intérieur de la cuve (23) et une arrête de coupe (22) de la vis sans fin (13) est inférieure à une distance radiale entre la spirale de recouvrement (17) et le côté intérieur de la cuve (23).

10. Dispositif d'épandage de fumier (3) doté d'un dispositif de convoyage (6) selon l'une quelconque des revendications précédentes.
